(19) Europäisches Patentamt
European Patent Office
Office européen des brevets

(11) **EP 4 478 267 A1**

(12) **EUROPEAN PATENT APPLICATION**

(43) Date of publication:
**18.12.2024 Bulletin 2024/51**

(21) Application number: **24180063.0**

(22) Date of filing: **04.06.2024**

(51) International Patent Classification (IPC):
*G06Q 10/04* (2023.01)   *G06Q 10/08* (2024.01)
*G06Q 10/0833* (2023.01)   *G06Q 10/0836* (2023.01)
*G06Q 10/083* (2024.01)   *G07F 17/12* (2006.01)

(52) Cooperative Patent Classification (CPC):
**G06Q 10/0836; G06Q 10/04; G06Q 10/08;
G06Q 10/0833; G06Q 10/0838; G07F 17/13**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.06.2023 SE 2350708**

(71) Applicant: **Instabee Group AB**
**113 43 Stockholm (SE)**

(72) Inventors:
- **Priftis, Alexis**
 **113 43 Stockholm (SE)**
- **Gabrielsson, Staffan**
 **113 43 Stockholm (SE)**
- **Enander, Karl**
 **113 43 Stockholm (SE)**
- **Strömqvist, Martin**
 **113 43 Stockholm (SE)**
- **Ljungström, Simon**
 **113 43 Stockholm (SE)**

(74) Representative: **Ström & Gulliksson AB**
**Box 5275**
**102 46 Stockholm (SE)**

(54) **COMPUTER-IMPLEMENTED METHOD OF FORECASTING AN OCCUPANCY OF AN ELECTRONIC PARCEL COMPARTMENT SYSTEM**

(57)    A computer-implemented method of forecasting an occupancy of an electronic parcel compartment system (110) is presented in this disclosure. The method includes determining a forecasted occupancy of the electronic parcel compartment system (110) by applying a prediction of pick-up of parcel(s) to predict parcel locker(s) of the electronic parcel compartment system 110 that is/are estimated to contain a parcel.

FIG. 1

EP 4 478 267 A1

## Description

## Technical Field

The present disclosure relates to electronic parcel compartment systems and, more specifically, electronic parcel compartment systems having a plurality of selectively lockable parcel lockers and allowing storage of parcels in its parcel lockers.

## Background

Locker systems are known in the art. Generally, a locker system comprises a plurality of compartments. Each compartment comprises a respective door that, in an opened state, allows objects to be placed into or retrieved from an interior of the compartment. A lock associated with the door allows the door to be locked (non-openable) or unlocked (openable) and thus allows for controlling access to the compartment. The locks may in particular be operated electronically. Therefore, locker systems are oftentimes called electronic parcel compartment systems.

One of the challenges with deliveries to destinations such as electronic parcel compartment systems is the fact that there is an uncertainty on the moment the parcel will be picked-up from the parcel locker in which it is stored. It is therefore generally impossible, or at least difficult, to know if the parcel locker containing a parcel to be picked-up, is available or not and can be used for another delivery or not. This uncertainty may be a challenge.

Firstly, this may be a challenge for a courier agent when s/he needs to plan a delivery of a parcel in an electronic parcel compartment system because it is unproductive to bring to a electronic parcel compartment system a parcel which can finally not be stored in this electronic parcel compartment system but also because waiting to get the information that a pick-up has occurred and therefore that a parcel locker is available is time consuming and also unproductive. With today's courier services this uncertainty sometimes also translates into unnecessarily many travels to find, more or less randomly, an available parcel locker of an electronic parcel compartment system. The many travels contribute to a negative environmental footprint. Also, this uncertainty may have a negative impact on the working environment of the courier agents carrying out the deliveries. For example, unnecessarily many lifts (some of which may be heavy weight lifts) is one disadvantageous effect for the courier agent and this may over time lead to wear and tear injuries of him/her.

Secondly, when a customer orders a parcel, this may be a challenge as it is difficult and sometimes nearly impossible to offer a specific location and pick-up time to the customer. Moreover, this uncertainty on the moment of pick-up generates a time lag between the moment the parcel is placed in the parcel locker and the moment the parcel is picked-up by the end user, or customer. This time lag generates a stock. Each parcel is stored during a finite time lapse which length is generally unknown.

## Summary

It is in view of the above considerations and others that the various embodiments of the present invention have been made.

Accordingly, the present disclosure therefore recognizes the fact that there is a need for alternatives to (e.g. improvement of) the existing art described above. It is an object of some aspects and embodiments described herein to solve, mitigate, alleviate, or eliminate one or more of the disadvantages with the prior art described above.

A general object of the present disclosure is therefore to provide an improved method and an improved electronic parcel compartment management system, which allows for improving the efficiency, e.g., by improving the resource allocation of a delivery service.

This general object has been addressed by the appended independent claims. Advantageous embodiments are defined in the dependent claims and throughout this disclosure.

According to a first aspect, there is provided a computer-implemented method of forecasting an occupancy of an electronic parcel compartment system. The electronic parcel compartment system comprises a plurality of selectively lockable parcel lockers and is configured to allow storage of a parcel in one of its parcel lockers.

The computer-implemented method comprises:

- obtaining data related to parcels already delivered or to be delivered to the electronic parcel compartment system during a time duration;
- predicting a probability of pick-up of parcel(s) from parcel lockers utilizing observed pick-up patterns; and
- determining the forecasted occupancy of said electronic parcel compartment system during said time duration by applying the predicted probability of pick-up of parcel(s) to predicted parcel locker(s) that is/are estimated to contain a parcel during said time duration.

Said observed pick-up pattern may be specific for each day and/or each time of the day.

Optionally, the method may further comprise, subsequent to obtaining data related to parcels already delivered or to be delivered to the electronic parcel compartment system during a time duration:

- predicting parcel lockers (e.g., including a number of parcel lockers) that is estimated to contain a parcel during said time duration, said prediction being based on said data related to parcels already delivered or to be delivered to the electronic parcel compartment system.

In some embodiments, obtaining data related to parcels already delivered or to be delivered to the electronic parcel compartment system during a time duration includes obtaining data including or otherwise being indicative of a number of parcels. In such embodiments, said predicting a number of parcel lockers that is estimated to contain a parcel during said time duration may further include predicting a number of parcel lockers that is estimated to contain a parcel during said time duration, said prediction being based on said number of parcels already delivered or to be delivered to the electronic parcel compartment system.

In some embodiments, predicting the probability of pick-up of parcel(s) from parcel lockers comprises: obtaining data regarding a drop-off time for each parcel and comparing the obtained drop-off time against observed pick-up patterns.

In some embodiments, obtaining data related to parcels already delivered or to be delivered to the electronic parcel compartment system during a time duration comprises: receiving said data from a track and trace module, the track and trace module being configured to store parcel data. For example, the stored parcel data may originate from parcel data received by the track and trace module from multiple senders of a distributed computing environment via a communications server. The senders may, e.g., be one or more of the following: (1) one or more electronic parcel compartment systems, (2) one or more sorting systems, e.g., arranged at a logistics center. (3) one or more mobile devices associated with a respective courier, and (4) one or more mobile devices associated with a respective consumer.

In some embodiments, the observed pick-up patterns are based on historical data from past pick-ups from said electronic parcel compartment system and/or other electronic parcel compartment systems being different from said electronic parcel compartment system.

In some embodiments, said observed pick-up patterns are based on statistical analyses of pick-ups from said electronic parcel compartment system and/or other electronic parcel compartment systems being different from said electronic parcel compartment system.

In advantageous embodiments, the computer-implemented method further comprises determining whether a specific type of parcel lockers of said electronic parcel compartment system is available to store a parcel during a time duration by:

- obtaining data related to parcels already delivered or to be delivered to parcel lockers of said specific type of the electronic parcel compartment system during said time duration;
- optionally predicting parcel lockers of said specific type (e.g., including a number of parcel lockers of said specific type) that is estimated to contain a parcel during said time duration, said prediction being based on properties of parcels already delivered or to be delivered to parcel lockers of said specific type;
- predicting a probability of pick-up of parcel(s) from parcel lockers of said specific type utilizing observed pick-up patterns for the specific type of parcel locker; and
- determining available parcel locker(s) of said specific type (e.g., a number of available parcel locker(s) of said specific type) during said time duration by applying the predicted probability of pick-up of parcel(s) to the predicted parcel lockers of said specific type that is/are estimated to contain a parcel during said time duration.

For example, the specific features of a parcel locker of a specific type may include one or more of the following: (1) size of the parcel locker, (2) assignment to a specific operator, e.g., a specific courier agent, and (3) assignment for storage of specific types of goods contained in the parcels, e.g., pharmacy products or products needing specific storage temperatures.

In some embodiments, the computer-implemented method comprises:

(i) observing delivery times of deliveries of parcels to the electronic parcel compartment system to determine corresponding drop-off times; and
(ii) observing corresponding lay times for each one of the observed delivery times, the lay times being indicative of the time duration from drop-off of a parcel to pick-up of said parcel;
(iii) repeatedly performing (i)-(ii) during the course of a predetermined time duration to form said pick-up pattern; and
(iv) storing the pick-up pattern in a database.

In one embodiment, predicting a probability that a parcel remains in a specific parcel locker of the electronic parcel compartment system may be performed by determining said probability as a function of lay time t after delivery utilizing the following equation:

$$ P\left(t > T\right) = 1 - \int_0^T p(t)dt $$

where p(t) represents said probability of pick-up of parcel(s) from parcel lockers and P(t>T) denotes a probability that a parcel remains in a parcel locker after time T, that is that a lay time is longer than T.

In one embodiment, the computer-implemented method comprises predicting, for parcels that have been delivered, a probability that a parcel is not picked up before time *T* provided that it has an observed lay time

of $T_0 < T$ by utilizing the following equation:

$$P(t > T \mid lay\ time \geq T_0) = \frac{P(t > T)}{P(t > T_0)}$$

In some embodiments, the computer-implemented method may further comprise communicating data including the determined forecasted occupancy of said electronic parcel compartment system. For example, said data including the determined forecasted occupancy of said electronic parcel compartment system may be communicated to a cloud service. Various communication devices may hence obtain, or otherwise retrieve, data related determined forecasted occupancy of said electronic parcel compartment system from, or via, this cloud service. Additionally, or alternatively, the computer-implemented method may comprise communicating data including the available parcel locker(s) of a specific type. For example, said data including the available parcel locker(s) of a specific type may be communicated to a cloud service. Various communication devices may hence obtain, or otherwise retrieve, this data from, or via, the cloud service. As will be appreciated, said data may additionally, or alternatively, comprise the number of available parcel locker(s) of the specific type.

According to a second aspect, there is provided an electronic parcel compartment management system comprising at least one electronic parcel compartment system. The at least one electronic parcel compartment system comprises a plurality of selectively lockable parcel lockers. The at least one electronic parcel compartment system is further configured to allow storage of one or more parcels in its parcel locker(s).

In some embodiments, the electronic parcel compartment management system comprises:

- means adapted to obtain data related to parcels already delivered or to be delivered to the electronic parcel compartment system during a time duration;
- means adapted to predict a probability of pick-up of parcel(s) from parcel lockers utilizing observed pick-up patterns; and
- means adapted to determine the forecasted occupancy of said electronic parcel compartment system during said time duration by applying the predicted probability of pick-up of parcel(s) to predicted parcel lockers that is/are estimated to contain a parcel during said time duration.

Said observed pick-up pattern may be specific for each day and/or each time of the day.

For example, the electronic parcel compartment management system may optionally also comprise means adapted to the predict parcel lockers (e.g., including a number of parcel lockers) that is estimated to contain a parcel during said time duration, said prediction being based on said data related to parcels already delivered or to be delivered to the electronic parcel compartment system.

In alternative embodiments, the electronic parcel compartment management system comprises:

- means adapted to obtain data including or otherwise indicative of a number of parcels already delivered or to be delivered to the electronic parcel compartment system during a time duration;
- optional means adapted to predict a number of parcel lockers that is estimated to contain a parcel during said time duration, said prediction being based on said number of parcels already delivered or to be delivered to the electronic parcel compartment system;
- means adapted to predict a probability of pick-up of parcel(s) from parcel lockers utilizing observed pick-up patterns; and
- means adapted to determine the forecasted occupancy of said electronic parcel compartment system during said time duration by applying the predicted probability of pick-up of parcel(s) to the predicted number of parcel lockers that is/are estimated to contain a parcel during said time duration.

In some implementations of the embodiments mentioned above, the electronic parcel compartment system is reduced to practice by means of at least one processor; and at least one memory, wherein the at least one memory comprises instructions executable by the at least one processor whereby the electronic parcel compartment system management system is operative to perform the method according to the first aspect.

According to a third aspect, there is provided a computer program. The computer program comprises instructions which, when executed on at least one processor, cause the at least one processor to carry out the method according to the first aspect. A carrier may also be provided. The carrier comprises the computer program according to the third aspect. The carrier may be any one of an electronic signal, an optical signal, a radio signal, or a computer-readable medium.

The various aspects and embodiments described throughout this disclosure allow for an improved forecasting of the occupancy of the various selectively lockable parcel lockers in an electronic parcel compartment system. Improved forecasting of the occupancy of the various selectively lockable parcel lockers in an electronic parcel compartment system may have several advantages, such as:

- *Efficient resource allocation:* Enhanced forecast capabilities can help operators of electronic compartment management systems to optimize their use of resources, such as locker space and delivery personnel. This allows them to make more accurate predictions about the demand for locker space, which can help them allocate resources more efficiently, reducing costs and increasing productivity.

- *Improved customer experience:* Accurate forecasts of locker occupancy can help delivery services ensure that lockers are available when customers need or desire them. This can improve the customer experience by reducing wait times and ensuring that customers receive their packages on time.

- *Reduced operational costs:* By accurately forecasting locker occupancy, delivery services can avoid overloading their lockers and incurring additional costs such as rerouting packages, increasing delivery personnel, or replacing damaged lockers.
- *Increased flexibility*: Enhanced forecast capabilities can help delivery services adapt to changing demand patterns and adjust their operations accordingly. This allows them to be more flexible and responsive to customers' needs, improving their overall service quality.
- *Data-driven decision-making*: Forecasting locker occupancy can provide delivery services with valuable data that can be used to make informed decisions about resource allocation and operational planning. This can help them identify trends and patterns, refine their processes, and make data-driven decisions that can improve their overall performance.

In summary, providing enhanced forecast capabilities of locker occupancy can help delivery services operate more efficiently, provide a better customer experience, reduce operational costs, increase flexibility, and make data-driven decisions. The applicant has realized that the above-mentioned advantages have further advantageous effects. A particularly important technical effect is that improved forecasting of the occupancy of the various selectively lockable parcel lockers in an electronic parcel compartment system leads to increasingly environmentally sustainable delivery services. By providing a more efficient resource allocation, increased flexibility and data-driven decision-making, it is possible to plan fewer and/or better transports for a given amount of parcel(s) to be delivered. For delivery services using non-electrical vehicles, e.g. vehicles using combusting engines, this means that the $CO_2$ footprint may be reduced. For delivery services using electrical vehicles (EVs), this means that the vehicles may be charged less frequently and, in turn, this contributes to a better usage of energy resources.

**Brief Description of the Drawings**

These and other aspects, features and advantages will be apparent and elucidated from the following description of various embodiments, reference being made to the accompanying drawings, in which:

Fig. 1 shows an illustration of an example embodiment of an electronic parcel compartment management system;

Fig. 2 is a flow chart illustrating an embodiment of a computer-implemented method for forecasting an occupancy of an electronic parcel compartment system;

Fig. 3 is a flow chart illustrating an embodiment of a computer-implemented method for determining whether a specific type of parcel lockers is available (or occupied);

Fig. 4 is a flow chart illustrating an embodiment of a computer-implemented method for creating or otherwise forming pick-up patterns;

Figs. 5-9 show different illustrations of pickup curves;

Fig. 10 shows an example embodiment of a data processing system configured to implement methods as shown in Figs. 2-4; and

Fig. 11 illustrates a carrier containing a computer program, in accordance with an embodiment.

**Detailed Description of Embodiments**

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements throughout the description.

As described above, prior art approaches for planning transports of parcel(s) to electronic parcel compartment systems are sometimes inadequate. To address this, and in accordance with an aspect of this disclosure, the present disclosure presents a novel approach of forecasting an occupancy of an electronic parcel compartment system. As will be appreciated from the following detailed description, this novel approach may enable delivery services to operate more efficiently, provide a better customer experience, reduce operational costs, increase flexibility, and make data-driven decisions. It has been realized by the applicant that this has the further technical effect of allowing for increasingly environmentally sustainable deliveries of parcel(s) to/from electronic parcel compartment systems.

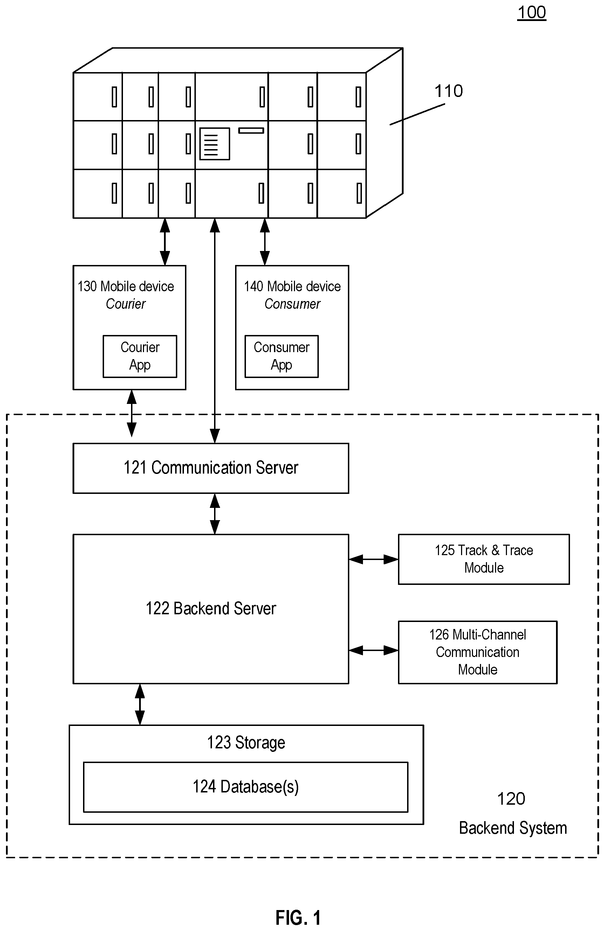

Reference is now made to Fig. 1, which shows an example electronic parcel compartment management system 100. The electronic parcel compartment management system 100 is operative to control and manage one or several electronic parcel compartment systems 110. The electronic parcel compartment system 110 is of a type comprising a plurality of selectively lockable parcel lockers as shown in Fig. 1. In some example implementations, the electronic parcel compartment management system 100 includes the electronic parcel compartment system 110 and a backend system 120 which is communicatively connectable to the electronic parcel compartment system 110. In some example implementations, such as the one illustrated in the example in Fig. 1, the backend system 120 comprises a communications server 121, a backend server 122, a storage 123 typically including one or more databases 124, a track-and-trace module 125 and a multi-channel communication module 126, all of which are communicatively connectable to each other. As will be appreciated, the backend system 120 has transmission and reception capabilities allowing the backend system 120 to communicate with other backend systems and/or electronic parcel compartment system(s) 110 through a radio frequency band through the use of different radio frequency technologies such as 5G NR (New Radio), LTE (Long Term Evolution), WCDMA (Wideband Code Division Multiple Access), or any other cellular network standardized by the 3rd Generation Partnership Project (3GPP), or any other wireless technology such as Wi-Fi, Bluetooth®, etcetera.

Different users may operate and interact with the electronic parcel compartment system 110. For example, couriers may operate and interact with the electronic parcel compartment system 110 using a mobile device 130, e.g., via an application program (app) which is downloaded and thus installed to the mobile device 130. This app is "Courier App" providing the courier the needed functionality for interacting with and operating the electronic parcel compartment system 110 and/or the back end system 120. Similarly, end users may operate and interact with the electronic parcel compartment system 110 using a mobile device 140, e.g., via an end user app for using the service provided by the service provider operating the electronic parcel compartment management system 100. The mobile device 130, 140 may for instance be a device selected from the group consisting of: a mobile telephone, a handheld communication device, a tablet computer, and a laptop computer.

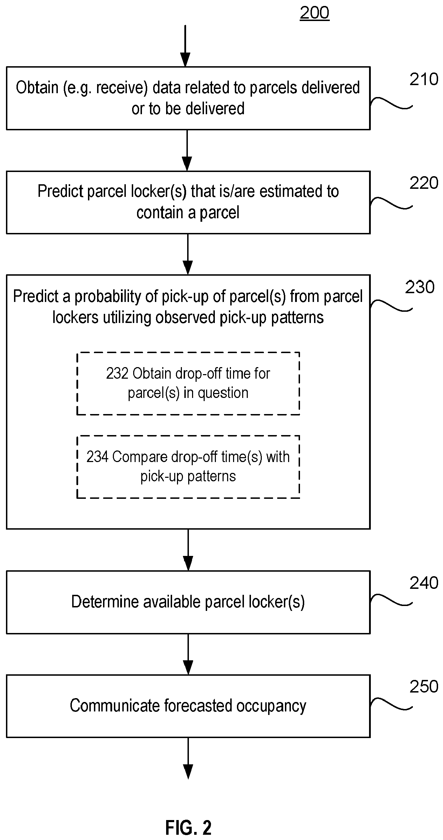

Reference is now made to Fig. 2, which shows a flowchart of a method of forecasting an occupancy of an electronic parcel compartment system. The method is computer-implemented, i.e., the method involves the use of one or more computers or other programmable apparatus(-es). Advantageously, but not necessarily, the method illustrated in Fig. 2 may therefore be performed, or otherwise executed, by an electronic parcel compartment management system 100 such as that described in conjunction with Fig. 1.

Action 210: Data related to parcels already delivered or to be delivered to the electronic parcel compartment system 100 during a time duration is obtained, or otherwise retrieved. The time duration may be predetermined. For example, in certain embodiments, data including, or otherwise indicative of, a number of parcels already delivered or to be delivered to the electronic parcel compartment system 100 during a time duration may be obtained, or otherwise retrieved in this action.

In some implementations, a track-and-trace module 125 of the backend system 120 is adapted to track and monitor parcels and shipments of parcels to/from the electronic parcel compartment system 110.

The track-and-trace module 125 is configured to store said data related to parcels (e.g., including, or otherwise indicative of, the number of parcels) already delivered or to be delivered to the electronic parcel compartment system 100. Additionally, or alternatively, the track-and-trace module 125 may be communicatively connected to the storage 123 (e.g., via back end server) to store said data related to parcels already delivered or to be delivered to a certain electronic parcel compartment system 100. In some implementations, the track-and-trace module 125 is configured to store said data temporarily whereas the storage 123 is used to store data for comparatively longer periods of time. The exact implementation should be tested and evaluated for each specific case depending on system requirements of the electronic parcel compartment management system 100 and or user demands.

For example, in some implementations, this action is performed by or otherwise executed by the backend server 122. In such implementations, the back end server 122 may receive said data from a track and trace module 125 and/or the storage 123.

As will be appreciated, parcel data may originate from parcel data received by the track and trace module 125 from multiple senders of a distributed computing environment via a communications server 121. The senders may for example be one or more of the following: (1) one or more electronic parcel compartment systems, (2) one or more sorting systems, e.g., arranged at a logistics center, (3) one or more mobile devices associated with a respective courier, and (4) one or more mobile devices associated with a respective consumer or end user.

Action 220: Optionally, a number of parcel lockers that is estimated to contain a parcel during said time duration is predicted. The prediction can be based on said number of parcels already delivered or to be delivered to the electronic parcel compartment system.

In some implementations, this action may be performed by or otherwise executed by the backend server 122.

Action 230: A probability of pick-up of parcel(s) from parcel lockers is predicted utilizing observed pick-up patterns. For example, the observed pick-up pattern may advantageously be specific for each day and/or each time of the day.

It should be appreciated that said observed pick-up patterns may advantageously be based on historical data from past pick-ups from said electronic parcel compartment system 110 and/or other electronic parcel compartment systems (not shown). In certain implementations, said observed pick-up patterns may be based on statistical analyses of pick-ups from the electronic parcel compartment system 110 and/or other electronic parcel compartment systems (not shown). The use of observed pick-up patterns will be discussed in further detail in the following.

Advantageously, the prediction of the probability of pick-up of parcel(s) from parcel lockers may optionally comprise obtaining 232 data regarding a drop-off time for each parcel. The action of obtaining 232 data regarding a drop-off time may be reduced into practice in different ways. For example, a courier may scan the parcel in question at the time of drop-off (delivery), i.e. just before the parcel in question is put into an open locker, and establish the time at which the parcel is scanned. Once scanned, the drop-off time corresponding to the scanned parcel can be automatically provided, e.g. communicated to, the database 124 of storage 123.

Furthermore, data regarding a drop-off time(s) for parcels is compared 234 against observed pick-up patterns. The observed pick-up patterns may be stored as records in a database, such as the database 124 of storage 123.

In some implementations, action 230 is performed by or otherwise executed by the backend server 122. As will be appreciated, the backend server 122 may in some implementations obtain, or retrieve, the data related to drop-off time(s) and observed pick-up patterns from storage 123.

*Action 240:* The forecasted occupancy of the electronic parcel compartment system 100 during the said time duration is determined, or otherwise concluded. The forecasted occupancy is determined by applying the predicted probability of pick-up of parcel(s) to predicted parcel locker(s) that is/are estimated to contain a parcel during the said time duration.

In some implementations, this action may be performed by or otherwise executed by the backend server 122.

*Action 250:* Data including the determined forecasted occupancy of said electronic parcel compartment system may be communicated. For example, this data may be communicated or otherwise transmitted to a cloud service. In some implementations, this data may then be made accessible to mobile devices 130, 140.

The applicant has realized that utilizing observed pick-up patterns for forecasting occupancy of the electronic parcel compartment system 100 has several advantages. For example, utilizing observed pick-up patterns as discussed above may allow for enhanced forecast capabilities of locker occupancy and this can help delivery services operate more efficiently, provide a better customer experience, reduce operational costs, increase flexibility, and make data-driven decisions. In addition, predicting the probability of pick-up of parcel(s) from parcel lockers based on drop-off times and comparisons with observed pick-up patterns may be more computationally efficient than existing prior art solutions. More particularly, when data arrives in the electronic parcel compartment management system 100 (more precisely the backend system 120 in many implementations) in a continuous manner, it is less computationally intensive to perform the forecast of occupancy of the electronic parcel compartment system 110 based on drop-off time(s) and corresponding comparisons with observed pick-up patterns. This allows for efficiently processing large amounts of data while at the same time providing accurate forecasts relatively quickly.

The applicant has realized that the above-mentioned advantages have further advantageous effects. A particularly important technical effect is that improved forecasting of the occupancy of the various selectively lockable parcel lockers in an electronic parcel compartment system leads to increasingly environmentally sustainable delivery services. By providing a more efficient resource allocation, increased flexibility and data-driven decision-making, it is possible to plan fewer and/or better transports for a given amount of parcel(s) to be delivered. For delivery services using non-electrical vehicles, e.g. vehicles using combusting engines, this means that the $CO_2$ footprint may be reduced. For delivery services using electrical vehicles (EVs), this means that the vehicles may be charged less frequently and, in turn, this contributes to a better usage of energy resources.

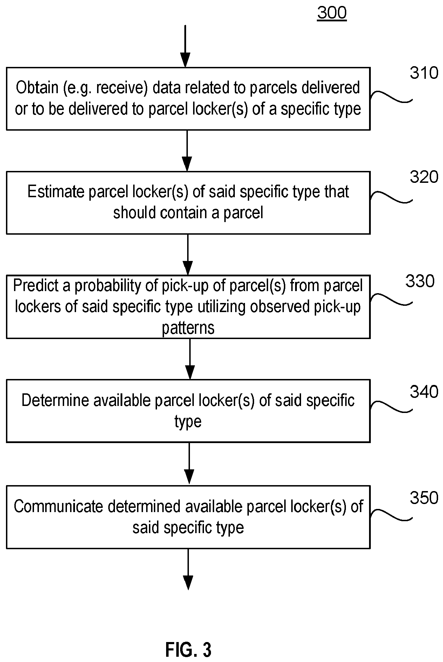

Reference is now made to Fig. 3, which shows a flowchart of a method of determining whether a specific type of parcel lockers of said electronic parcel compartment system is available to store a parcel during a time duration.

*Action 310:* Data related to parcels (e.g., including a number of parcels) already delivered or to be delivered to parcel lockers of a specific type of the electronic parcel compartment system is obtained, or otherwise retrieved. In some implementations, this action may be performed or otherwise executed as part of action 210 described above. Here, the specific features of a parcel locker of a specific type may include one or more of the following: (1) size of the parcel locker, (2) assignment to a specific operator, e.g., a specific courier agent, (3) assignment for storage of specific types of goods contained in the parcels, e.g., pharmacy products or products needing specific storage temperatures.

*Action 320:* Optionally, a number of parcel lockers of said specific type that is estimated to contain a parcel during said time duration is predicted. This prediction may be based on properties of parcels (e.g., including a number of parcels) already delivered or to be delivered to parcel lockers of said specific type. In some implementations, this action may be performed or otherwise executed as part of action 220 described above.

*Action 330:* A probability of pick-up of parcel(s) from parcel lockers of said specific type utilizing observed pick-up patterns for the specific type of parcel locker is predicted. In some implementations, this action may be performed or otherwise executed as part of action 230 described above.

*Action 340:* Available parcel locker(s) of said specific type during said time duration is determined, or otherwise concluded, by applying the predicted probability of pick-up of parcel(s) to the predicted parcel lockers of said specific type that is/are estimated to contain a parcel during said time duration. In some implementations, this action may be performed or otherwise executed as part of action 240 described above.

_Action 350:_ Data including the available parcel locker(s) of a specific type may be communicated. For example, this data may be communicated or otherwise transmitted to a cloud service. In some implementations, this data may then be made accessible to mobile devices 130, 140.

Determining whether a specific type of parcel lockers of said electronic parcel compartment system is available to store a parcel allows for an even more efficient, reliable, and user-centric solution while also reducing costs and environmental impact.

_Detailed example implementations utilizing pick-up patterns_

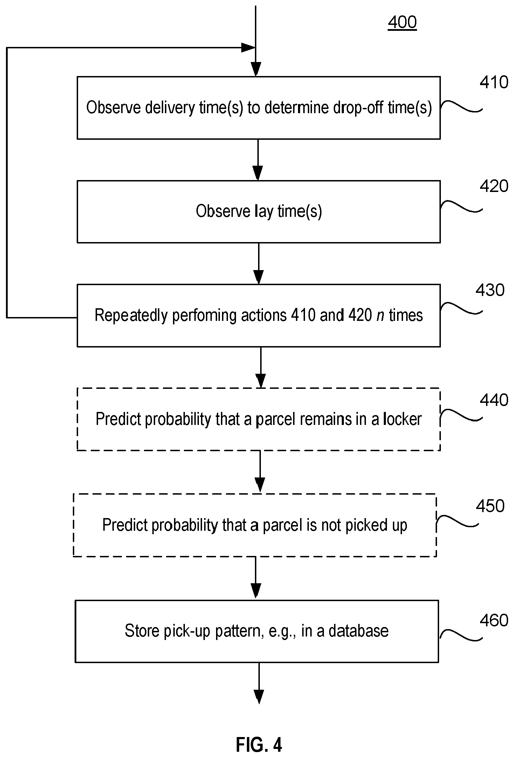

With further reference to Fig. 4, detailed example implementations utilizing observed pick-up patterns will be described in more detail.

In some implementations, the computer implemented method 200 includes:

> (1) observing 410 delivery times of deliveries of parcels to the electronic parcel compartment system to determine corresponding drop-off times; and
> (2) observing 420 corresponding lay times for each one of the observed delivery times, the lay times being indicative of the time duration from drop-off of a parcel to pick-up of said parcel;
> (3) repeatedly 430 performing (1)-(2) during the course of a predetermined time duration to form said pick-up pattern; and
> (4) storing 440 the pick-up pattern in a database, e.g., database 124 of the backend system 120 (Fig.1).

Additionally, the method may comprise predicting 450 a probability that a parcel remains in a specific parcel locker of the electronic parcel compartment system 110 by determining said probability as a function of lay time t after delivery utilizing the following equation:

$$P\left(t > T\right) = 1 - \int_0^T p(t)dt$$

where p(t) represents said probability of pick-up of parcel(s) from parcel lockers and P(t>T) denotes a probability that a parcel remains in a parcel locker after time T, that is that a lay time is longer than T.

Additionally, or alternatively, the method may comprise predicting, for parcels that have been delivered, a probability that a parcel is not picked up before time T provided that it has an observed lay time of $T_0 < T$ by utilizing the following equation:

$$P(t > T \mid lay\ time \geq T_0) = \frac{P\left(t > T\right)}{P(t > T_0)}$$

A background to explain the above formulas for predicting, or otherwise determining, pickup probability will now be given in the following.

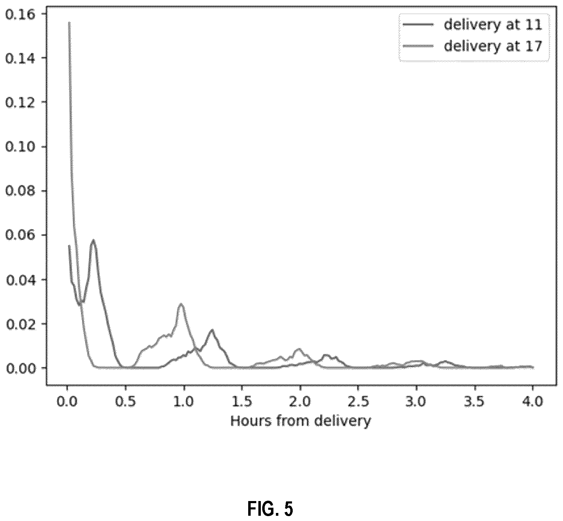

**Pickup probability:** In order to determine if an occupied locker of the electronic compartments system 110 can be used for future deliveries, the applicant has realized that it is generally advantageous to predict the probability of pickups. The applicant has further realized that some of the most useful variables for predicting the probability of pickup, at any future time, are _delivery time_ and the _lay time,_ i.e. the time that has passed, or otherwise lapsed, since the delivery time. The delivery time impacts the probability of pickup time for several reasons. If the delivery is done in the evening, there is a short time window to pick up before stores close compared to a morning delivery. During weekends the lay time is typically longer which affects pickup probability of deliveries made before and during weekends. To fully leverage the value of delivery time, it is possible to categorize data on delivered parcels. All parcels that are delivered within a certain time interval during a certain weekday are put in a certain bin. For this reason, the applicant generally creates bins of type 'day HH:MM'. For example, there will be a bin called '0 12:00' for all parcels delivered on a Monday between 11:45 and 12:15. Fig. 5 shows for illustrative purpose only a representative example pickup probability as a function of time from delivery, for deliveries made at 11 and 17 respectively.

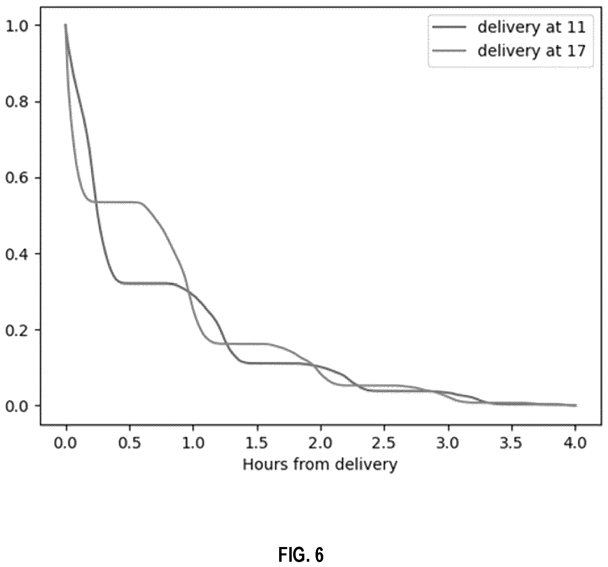

**Pickup curves:** For the purpose of determining what delivery time to present for users, or end consumers, in checkout for new parcels, it may be necessary (or at least important) to determine the probability that delivered parcels remain at all future deliveries. From the pickup probabilities described above, it is possible to determine, or calculate, the probability that a parcel remains in the locker as a function of lay time t after a delivery, by integrating the pickup probability from 0 to t. Sometimes, the applicant refers to such a function as a _pickup curve_, see Fig. 6.

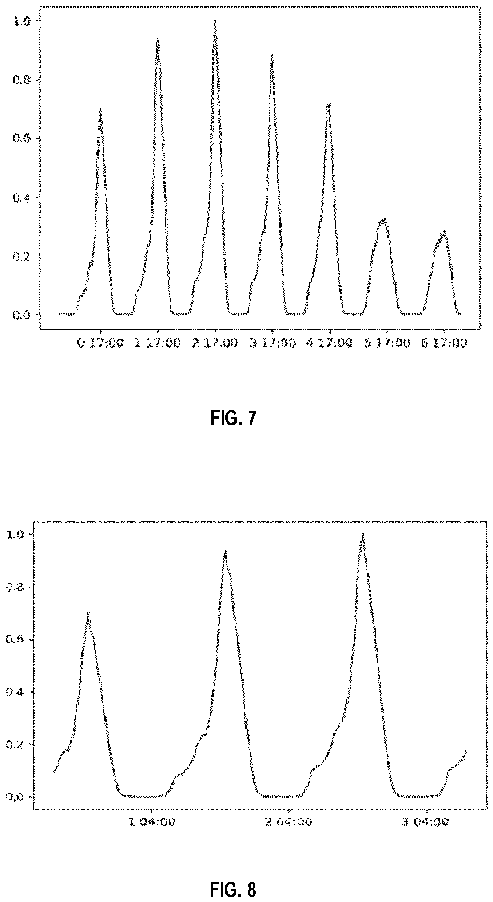

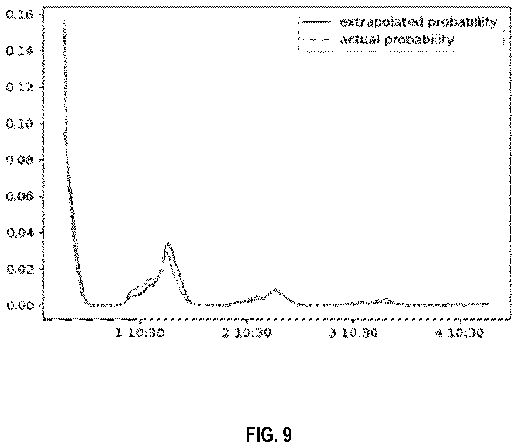

**"The 9 AM problem":** If no deliveries have been performed during a certain time interval, there may be no, or too little, data to determine or otherwise calculate pickup probabilities for the associated time bin. The pickup probabilities are, however, still needed, or important, if new delivery times are to be introduced. For example, if no deliveries have been made around 9 am, there would exist no data for determining pickup probabilities for a delivery made at 9:00 am. However, there is generally data on pickup times throughout a whole week. This data may be used together with a general exponential decrease of pickup probabilities to extrapolate pickup probabilities for time intervals (or time bins) where there does not exist such data yet. The distribution of pickup times during the week, which the applicant generally refers to as pickup intensity, is shown in Fig. 7. In Fig. 8, representative example pickups between Monday 17:00 ('0 17:00') and Friday 17:00 are singled out. If these are scaled with a properly adapted exponentially decreasing function it is possible to determine a good approximation of the actual probability distribution, see Fig. 9. This method can be used for any delivery time.

Example implementations of embodiments of a data processing system

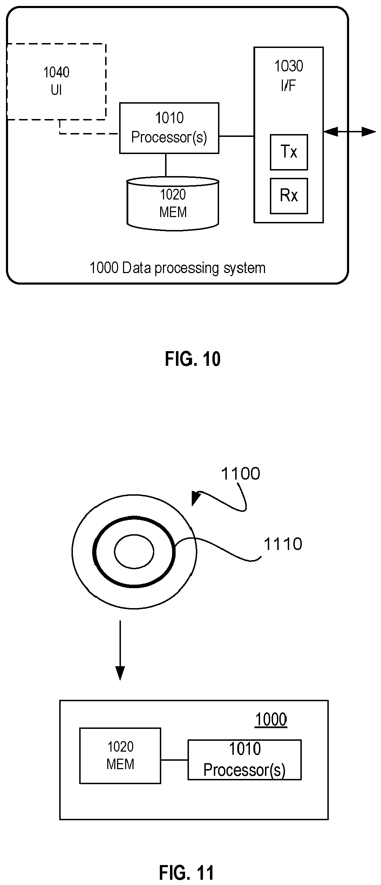

Fig. 10 illustrates a data processing system 1000, which is configured for performing or otherwise executing the methods according to the various aspects and embodiments discussed in this disclosure. As is schematically illustrated in Fig. 10, the data processing system 1000 comprises hardware 1010, 1020, 1030, and 1040. For example, the data processing system 1000 may comprise one or more processors 1010 and one or more memories 1020. Also, a communications interface 1030 may be provided in order to allow the data processing system 1000 to communicate with other data processing systems and/or communication devices, e.g. via a network such as the Internet. To this end, the communications interface 1030 may comprise a transmitter (Tx) and a receiver (Rx). Alternatively, the communications interface 1030 may comprise a transceiver (Tx/Rx) combining both transmission and reception capabilities. The communications interface 1030 may include a radio frequency (RF) interface allowing the data processing system 1000 to communicate with other data processing systems and/or communication devices through a radio frequency band through the use of different radio frequency technologies such as 5G NR (New Radio), LTE (Long Term Evolution), WCDMA (Wideband Code Division Multiple Access), or any other cellular network standardized by the 3rd Generation Partnership Project (3GPP), or any other wireless technology such as Wi-Fi, Bluetooth®, etcetera. The data processing system 1000 may optionally also comprise a user interface 1040.

The data processing system 1000 may be embodied as an electronic parcel compartment management system 100 comprising at least one electronic parcel compartment system 110, wherein the at least one electronic parcel compartment system 110 includes a plurality of selectively lockable parcel lockers and being configured to allow storage of a parcel in one of its parcel lockers (Fig. 1).

Example computer-readable mediums

Turning now to Fig. 11, another aspect will be briefly discussed. Fig. 11 shows an example of a computer-readable medium, in this example in the form of a data disc 100. In one embodiment the data disc 1100 is a magnetic data storage disc. The data disc 1100 is configured to carry instructions 1110 that can be loaded into a memory 1020 of a data processing system 1000. Upon execution of said instructions by a processor 1010 of the data processing system 1000, the data processing system 1000 is caused to execute a method or procedure according to the embodiments disclosed in this disclosure. The data disc 1100 is arranged to be connected to or within and read by a reading device (not shown), for loading the instructions into the processor. One such example of a reading device in combination with one (or several) data disc(s) 1100 is a hard drive. It should be noted that the computer-readable medium can also be other mediums such as compact discs, digital video discs, flash memories or other memory technologies commonly used. In such an embodiment the data disc 1100 is one type of a tangible computer-readable medium. The instructions may alternatively be downloaded to a computer data reading device, such as the data processing system 1000 or another computer capable of reading computer coded data on a computer-readable medium, by comprising the instructions in a computer-readable signal (not shown) which is transmitted via a wireless (or wired) interface (for example via the Internet) to the computer data reading device for loading the instructions into a processor 1010 of the data processing system 1000. In such an embodiment, the computer-readable signal is one type of a non-tangible computer-readable medium.

As will be appreciated by those skilled in the art, modifications and other variants of the described aspects and embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

**Claims**

1. A computer-implemented method (200) of forecasting an occupancy of an electronic parcel compartment system (110), said electronic parcel compartment system (110) comprising a plurality of selectively lockable parcel lockers and being configured to allow storage of a parcel in one of its parcel lockers, the computer-implemented method (200) comprising:

> obtaining (210) data related to parcels already delivered or to be delivered to the electronic parcel compartment system (110) during a time duration;
> predicting (220) parcel lockers that is estimated to contain a parcel during said time duration, said prediction being based on said data related to parcels already delivered or to be delivered to the electronic parcel compartment system (110);
> predicting (230) a probability of pick-up of parcel(s) from parcel lockers utilizing observed pick-up patterns; and
> determining (240) the forecasted occupancy of said electronic parcel compartment system (110) during said time duration by applying the predicted probability of pick-up of parcel(s) to predicted parcel locker(s) that is/are estimated to contain a parcel during said time duration.

2. The computer-implemented method (200) of claim 1, wherein predicting (230) the probability of pick-up of parcel(s) from parcel lockers comprises:

> obtaining (232) data regarding a drop-off time for each parcel; and
> comparing (234) the obtained drop-off time against observed pick-up patterns.

3. The computer-implemented method of claim 1 or 2, wherein obtaining (210) data related to parcels already delivered or to be delivered to the electronic parcel compartment system (110) during a time duration comprises:
receiving said data from a track and trace module, the track and trace module being configured to store parcel data.

4. The computer-implemented method of claim 3, wherein the stored parcel data originates from parcel data received by the track and trace module from multiple senders of a distributed computing environment via a communications server, the senders being one or more of the following:

> - one or more electronic parcel compartment systems;
> - one or more sorting systems, e.g., arranged at a logistics center;
> - one or more mobile devices associated with a respective courier; and
> - one or more mobile devices associated with a respective consumer.

5. The computer-implemented method (200) of any one of the claims 1-4, wherein said observed pick-up patterns are based on historical data from past pick-ups from said electronic parcel compartment system (110) and/or other electronic parcel compartment systems being different from said electronic parcel compartment system (110).

6. The computer-implemented method (200) of any one of the claims 1-5, wherein said observed pick-up patterns are based on statistical analyses of pick-ups from said electronic parcel compartment system (110) and/or other electronic parcel compartment systems being different from said electronic parcel compartment system (110).

7. The computer-implemented method (200) of any one of claims 1-6, wherein the computer-implemented method further comprises determining (300) whether a specific type of parcel lockers of said electronic parcel compartment system (110) is available to store a parcel during a time duration by:

> obtaining (310) data related to parcels already delivered or to be delivered to parcel lockers of said specific type of the electronic parcel compartment system (110) during said time duration;
> predicting (320) parcel lockers of said specific type that is estimated to contain a parcel during said time duration, said prediction being based on properties of parcels already delivered or to be delivered to parcel lockers of said specific type;
> predicting (330) a probability of pick-up of parcel(s) from parcel lockers of said specific type utilizing observed pick-up patterns for the specific type of parcel locker; and
> determining (340) available parcel locker(s) of said specific type during said time duration by applying the predicted probability of pick-up of parcel(s) to the predicted parcel lockers of said specific type that is/are estimated to contain a parcel during said time duration.

8. The computer-implemented method (200) of claim 7, wherein specific features of a parcel locker of a specific type include one or more of the following:

> - size of the parcel locker;
> - assignment to a specific operator, e.g., a specific courier agent;
> - assignment for storage of specific types of goods contained in the parcels, e.g., pharmacy products or products needing specific storage temperatures.

9. The computer-implemented method (200) of any one of claims 1-8, comprising:

(v) observing (410) delivery times of deliveries of parcels to the electronic parcel compartment system (110) to determine corresponding drop-off times; and

(vi) observing (420) corresponding lay times for each one of the observed delivery times, the lay times being indicative of the time duration from drop-off of a parcel to pick-up of said parcel;

(vii) repeatedly performing (v)-(vi) (430) during the course of a predetermined time duration to form said pick-up pattern; and

(viii) storing (440) the pick-up pattern in a database.

10. The computer-implemented (200) method of claim 9, comprising:

predicting (450) a probability that a parcel remains in a specific parcel locker of the electronic parcel compartment system (110) by determining said probability as a function of lay time t after delivery utilizing the following equation:

$$P\left(t > T\right) = 1 - \int_0^T p(t)dt$$

where p(t) represents said probability of pick-up of parcel(s) from parcel lockers and P(t>T) denotes a probability that a parcel remains in a parcel locker after time T, that is that a lay time is longer than T.

11. The computer-implemented method (200) of claim 9, comprising:
predicting (460), for parcels that have been delivered, a probability that a parcel is not picked up before time $T$ provided that it has an observed lay time of $T_0 < T$ by utilizing the following equation:

$$P(t > T \mid lay\ time \geq T_0) = \frac{P\left(t > T\right)}{P(t > T_0)}$$

12. The computer-implemented method of any one of the claims 1-11, further comprising:

communicating data including the determined forecasted occupancy of said electronic parcel compartment system (110) to a courier mobile device; and/or

communicating data including available parcel locker(s) of a specific type to a courier mobile device.

13. An electronic parcel compartment management system (100) comprising at least one electronic parcel compartment system (110), said at least one electronic parcel compartment system (110) comprising a plurality of selectively lockable parcel lockers and being configured to allow storage of a parcel in one of its parcel lockers, the electronic parcel compartment system management system (100) comprising:

at least one processor; and
at least one memory, wherein the at least one memory comprises instructions executable by the at least one processor whereby the electronic parcel compartment system management system (100) is operative to perform the method according to any one of the claims 1-12.

14. A computer program comprising instructions (1110) which, when executed on at least one processor (1010), cause the at least one processor (1010) to carry out the method according to any one of the claims 1-12.

15. A carrier (1100) comprising the computer program according to claim 14, wherein the carrier (1100) is any one of an electronic signal, an optical signal, a radio signal, or a computer-readable medium.

100

110

130 Mobile device
*Courier*

Courier
App

140 Mobile device
*Consumer*

Consumer
App

121 Communication Server

122 Backend Server

125 Track & Trace
Module

126 Multi-Channel
Communication
Module

123 Storage

124 Database(s)

120
Backend System

FIG. 1

200

Obtain (e.g. receive) data related to parcels delivered or to be delivered — 210

Predict parcel locker(s) that is/are estimated to contain a parcel — 220

Predict a probability of pick-up of parcel(s) from parcel lockers utilizing observed pick-up patterns — 230

232 Obtain drop-off time for parcel(s) in question

234 Compare drop-off time(s) with pick-up patterns

Determine available parcel locker(s) — 240

Communicate forecasted occupancy — 250

FIG. 2

<u>300</u>

Obtain (e.g. receive) data related to parcels delivered
or to be delivered to parcel locker(s) of a specific type — 310

Estimate parcel locker(s) of said specific type that
should contain a parcel — 320

Predict a probability of pick-up of parcel(s) from parcel
lockers of said specific type utilizing observed pick-up
patterns — 330

Determine available parcel locker(s) of said specific
type — 340

Communicate determined available parcel locker(s) of
said specific type — 350

**FIG. 3**

400

Observe delivery time(s) to determine drop-off time(s) — 410

Observe lay time(s) — 420

Repeatedly perfoming actions 410 and 420 $n$ times — 430

Predict probability that a parcel remains in a locker — 440

Predict probability that a parcel is not picked up — 450

Store pick-up pattern, e.g., in a database — 460

FIG. 4

FIG. 5

FIG. 6

FIG. 7

FIG. 8

FIG. 9

1000 Data processing system

**FIG. 10**

**FIG. 11**

Europäisches
Patentamt

European
Patent Office

Office européen
des brevets

# EUROPEAN SEARCH REPORT

**Application Number**

EP 24 18 0063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/245579 A1 (POINTEAU STÉPHANE [FR]) 4 August 2022 (2022-08-04) <br> * paragraph [0007] - paragraph [0017] * <br> * paragraph [0021] - paragraph [0026] * <br> * paragraph [0035] - paragraph [0039] * <br> * paragraph [0062] - paragraph [0073] * <br> * paragraph [0090] - paragraph [0098] * <br> - - - - - | 1-15 | INV. <br> G06Q10/04 <br> G06Q10/08 <br> G06Q10/0833 <br> G06Q10/0836 <br> G06Q10/083 <br> G07F17/12 |
| X | US 2020/134559 A1 (LIEVENS DANIEL [BE] ET AL) 30 April 2020 (2020-04-30) <br> * paragraph [0048] - paragraph [0052] * <br> * paragraph [0073] - paragraph [0075] * <br> - - - - - | 1,13-15 | |
| A | US 2018/190062 A1 (ROBINSON KALIN [US]) 5 July 2018 (2018-07-05) <br> * paragraph [0037] - paragraph [0044] * <br> * paragraph [0060] - paragraph [0063] * <br> * paragraph [0072] - paragraph [0076] * <br> - - - - - | 1-15 | |

**TECHNICAL FIELDS SEARCHED (IPC)**

G06Q
G07G
G07F

The present search report has been drawn up for all claims

| Place of search | Date of completion of the search | Examiner |
|---|---|---|
| Munich | 28 July 2024 | Shivaldova, Veronika |

EPO FORM 1503 03.82 (P04C01)

## ANNEX TO THE EUROPEAN SEARCH REPORT
## ON EUROPEAN PATENT APPLICATION NO.

EP 24 18 0063

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2024

| Patent document cited in search report | Publication date | Patent family member(s) | | Publication date |
|---|---|---|---|---|
| US 2022245579 A1 | 04-08-2022 | EP | 4036826 A1 | 03-08-2022 |
| | | JP | 2022117488 A | 10-08-2022 |
| | | US | 2022245579 A1 | 04-08-2022 |
| US 2020134559 A1 | 30-04-2020 | AU | 2014248922 A1 | 05-11-2015 |
| | | AU | 2014248927 A1 | 05-11-2015 |
| | | AU | 2014248972 A1 | 05-11-2015 |
| | | AU | 2014248990 A1 | 05-11-2015 |
| | | AU | 2014248992 A1 | 05-11-2015 |
| | | AU | 2018200660 A1 | 15-02-2018 |
| | | AU | 2020202603 A1 | 14-05-2020 |
| | | AU | 2020202871 A1 | 21-05-2020 |
| | | BR | 112015022799 A2 | 18-07-2017 |
| | | BR | 112015022824 A2 | 18-07-2017 |
| | | BR | 112015022915 A2 | 18-07-2017 |
| | | BR | 112015023039 A2 | 18-07-2017 |
| | | BR | 112015023040 A2 | 18-07-2017 |
| | | BR | 112015023041 A2 | 18-07-2017 |
| | | BR | 112015023042 A2 | 18-07-2017 |
| | | BR | 112015023136 A2 | 18-07-2017 |
| | | BR | 112015023137 A2 | 18-07-2017 |
| | | BR | 112015023141 A2 | 18-07-2017 |
| | | CA | 2905338 A1 | 09-10-2014 |
| | | CA | 2905379 A1 | 09-10-2014 |
| | | CA | 2905386 A1 | 09-10-2014 |
| | | CA | 2905408 A1 | 09-10-2014 |
| | | CA | 2905763 A1 | 09-10-2014 |
| | | CA | 2905771 A1 | 09-10-2014 |
| | | CA | 2905781 A1 | 09-10-2014 |
| | | CA | 2905833 A1 | 09-10-2014 |
| | | CA | 2905861 A1 | 09-10-2014 |
| | | CA | 2905882 A1 | 09-10-2014 |
| | | CA | 3077897 A1 | 09-10-2014 |
| | | CN | 105308637 A | 03-02-2016 |
| | | CN | 105359175 A | 24-02-2016 |
| | | CN | 105378779 A | 02-03-2016 |
| | | CN | 105378780 A | 02-03-2016 |
| | | CN | 106132824 A | 16-11-2016 |
| | | EP | 2969744 A2 | 20-01-2016 |
| | | EP | 2973263 A2 | 20-01-2016 |
| | | EP | 2973288 A2 | 20-01-2016 |
| | | EP | 2973291 A2 | 20-01-2016 |
| | | EP | 2973292 A2 | 20-01-2016 |
| | | JP | 6151430 B2 | 21-06-2017 |
| | | JP | 6262841 B2 | 17-01-2018 |
| | | JP | 6268273 B2 | 24-01-2018 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 24 18 0063

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2024

| Patent document cited in search report | Publication date | Patent family member(s) | | Publication date |
|---|---|---|---|---|
| | | JP | 6272983 B2 | 31-01-2018 |
| | | JP | 6408677 B2 | 17-10-2018 |
| | | JP | 6449396 B2 | 09-01-2019 |
| | | JP | 6486893 B2 | 20-03-2019 |
| | | JP | 6580647 B2 | 25-09-2019 |
| | | JP | 2016515081 A | 26-05-2016 |
| | | JP | 2016515082 A | 26-05-2016 |
| | | JP | 2016517081 A | 09-06-2016 |
| | | JP | 2016519352 A | 30-06-2016 |
| | | JP | 2016519353 A | 30-06-2016 |
| | | JP | 2017220260 A | 14-12-2017 |
| | | JP | 2017220261 A | 14-12-2017 |
| | | JP | 2018041488 A | 15-03-2018 |
| | | KR | 20160010417 A | 27-01-2016 |
| | | KR | 20160010418 A | 27-01-2016 |
| | | KR | 20160012989 A | 03-02-2016 |
| | | KR | 20160012990 A | 03-02-2016 |
| | | KR | 20160041029 A | 15-04-2016 |
| | | KR | 20210037003 A | 05-04-2021 |
| | | MY | 181139 A | 18-12-2020 |
| | | MY | 181174 A | 21-12-2020 |
| | | MY | 181563 A | 29-12-2020 |
| | | MY | 182078 A | 18-01-2021 |
| | | MY | 187254 A | 15-09-2021 |
| | | MY | 195278 A | 12-01-2023 |
| | | MY | 199109 A | 13-10-2023 |
| | | SG | 10201700951U A | 27-04-2017 |
| | | SG | 11201507526V A | 29-10-2015 |
| | | SG | 11201507531R A | 29-10-2015 |
| | | SG | 11201507535W A | 29-10-2015 |
| | | SG | 11201507536Q A | 29-10-2015 |
| | | SG | 11201507549S A | 29-10-2015 |
| | | SG | 11201507559Q A | 29-10-2015 |
| | | SG | 11201507566U A | 29-10-2015 |
| | | SG | 11201507570Y A | 29-10-2015 |
| | | SG | 11201507597T A | 29-10-2015 |
| | | US | 2014278099 A1 | 18-09-2014 |
| | | US | 2014278602 A1 | 18-09-2014 |
| | | US | 2014278603 A1 | 18-09-2014 |
| | | US | 2014278691 A1 | 18-09-2014 |
| | | US | 2014278843 A1 | 18-09-2014 |
| | | US | 2014278898 A1 | 18-09-2014 |
| | | US | 2014279650 A1 | 18-09-2014 |
| | | US | 2014279654 A1 | 18-09-2014 |
| | | US | 2014279658 A1 | 18-09-2014 |
| | | US | 2014279663 A1 | 18-09-2014 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 24 18 0063

This annex lists the patent family members relating to the patent documents cited in  the above-mentioned European search report.
The members are as contained in the European Patent Office EDP file on
The European Patent Office is in no way liable for these particulars which are merely given for the purpose of information.

28-07-2024

| Patent document cited in search report | Publication date | Patent family member(s) | | Publication date |
|---|---|---|---|---|
| | | US | 2014279664 A1 | 18-09-2014 |
| | | US | 2014279665 A1 | 18-09-2014 |
| | | US | 2014279666 A1 | 18-09-2014 |
| | | US | 2014279668 A1 | 18-09-2014 |
| | | US | 2016098680 A1 | 07-04-2016 |
| | | US | 2018005184 A1 | 04-01-2018 |
| | | US | 2018025319 A1 | 25-01-2018 |
| | | US | 2018253688 A1 | 06-09-2018 |
| | | US | 2020134559 A1 | 30-04-2020 |
| | | US | 2021004761 A1 | 07-01-2021 |
| | | WO | 2014164811 A2 | 09-10-2014 |
| | | WO | 2014164820 A2 | 09-10-2014 |
| | | WO | 2014164825 A2 | 09-10-2014 |
| | | WO | 2014164829 A2 | 09-10-2014 |
| | | WO | 2014164831 A2 | 09-10-2014 |
| | | WO | 2014164839 A2 | 09-10-2014 |
| | | WO | 2014164846 A2 | 09-10-2014 |
| | | WO | 2014164848 A2 | 09-10-2014 |
| | | WO | 2014164853 A2 | 09-10-2014 |
| | | WO | 2014164855 A2 | 09-10-2014 |
| | | WO | 2014164857 A2 | 09-10-2014 |
| | | WO | 2014164860 A2 | 09-10-2014 |
| | | WO | 2014164866 A2 | 09-10-2014 |
| | | WO | 2014164871 A2 | 09-10-2014 |
| US 2018190062 A1 | 05-07-2018 | NONE | | |

EPO FORM P0459

For more details about this annex : see Official Journal of the European Patent Office, No. 12/82

page 3 of 3